# EUROPÄISCHE PATENTSCHRIFT

(11) **EP 2 572 114 B1**
(45) Veröffentlichungstag und Bekanntmachung des Hinweises auf die Patenterteilung: **13.07.2016**
(21) Anmeldenummer: 11719514.9
(22) Anmeldetag: 09.05.2011
(51) Int. Cl.: F16C 19/00, G01P 3/44, G01P 3/487, H02K 7/18, F16C 41/00

(54) **WÄLZLAGER MIT INTEGRIERTEM GENERATOR**
ROLLING BEARING HAVING AN INTEGRATED GENERATOR
PALIER À ROULEMENT À GÉNÉRATEUR INTÉGRÉ

(30) Priorität: 21.05.2010 DE 102010021158
(43) Veröffentlichungstag der Anmeldung: 27.03.2013
(73) Patentinhaber: Schaeffler Technologies AG & Co. KG, 91074 Herzogenaurach (DE)
(72) Erfinder: BENKERT, Franbk, 97534 Waigolshausen (DE); RINK, Thomas, 97705 Waldfenster (DE)
(86) Internationale Anmeldenummer: PCT/EP2011/057383
(87) Internationale Veröffentlichungsnummer: WO 2011/144475

(56) Entgegenhaltungen:
- EP-A1- 0 594 550
- EP-A1- 2 116 813
- DE-A1- 19 512 512
- DE-A1-102008 035 717
- JP-A- 2004 132 447
- US-A1- 2005 174 001

## Beschreibung

### Gebiet der Erfindung

Die Erfindung betrifft ein Wälzlager mit einem im Zwischenraum zwischen zwei zueinander rotierbaren Lagerringen angeordneten, permanent erregten ersten Generator gemäß dem Oberbegriff des Anspruchs 1. Weiterhin betrifft die Erfindung ein Verfahren zum Energiemanagement eines mit einem Generator ausgestatteten Wälzlagers.

Rotationswälzlager umfassen als gegeneinander bewegbare rotierbare Lagerteile einen Innenring und einen Außenring und dazwischen angeordnete Wälzkörper. In verschiedenen Lageranwendungen sind beispielsweise die Erfassung von Drehzahl und Drehrichtung oder andere Überwachungsaufgaben des rotierenden Lagerteils erforderlich. Für diese und andere Aufgaben werden elektronische Komponenten (Sensoren, Aktoren, Prozessoren, Datenspeicher usw.) verwendet. Diesen elektronischen Komponenten muss Energie zugeführt werden. Aus dem Stand der Technik sind hierfür einige Lösungen bekannt.

Die WO 2008/014766 A1 beschreibt eine Vorrichtung zur Überwachung mindestens einer Betriebsgröße eines Radsatzlagers eines Schienenfahrzeuges. Die Vorrichtung umfasst einen Sensor und eine Sendeeinheit, die mit dem Lagerring rotierend am Ende der Radachse angeordnet sind und eine Generatoreinheit mit einem mitrotierenden und einem drehfesten Generatorelement zur Energieversorgung von Sensor und Sendeeinheit. Das mitrotierende Generatorelement ist ein am Ende der Radachse angeordnetes Wiegandelement, während das zweite kooperierende Generatorelement von ortsfest angeordneten Magneten gebildet ist. Diese Vorrichtung ist nicht direkt in das Lager integrierbar.

In der EP 0 397 309 A2 wird eine Lageranordnung beschrieben, bei der ein Drehzahlmesser integriert ist. Bei einem zweireihigen Wälzlager ist ein Polrad zwischen den beiden Wälzkörperreihen am rotierbaren Innenring montiert. Das Polrad ist an seinem Umfang durch einen Magnetring mit abwechselnd angeordneten Polen der Magnete gebildet. Ein Hallsensor ist im Außenring in radialer Ausrichtung zum Polrad vorgesehen. Das Polrad kann auch aus einem ferromagnetischen Material mit ausgeprägten Polen (z.B. Zähnen) ausgeführt werden. Dann ist ein Magnet in der Sensoranordnung erforderlich. Da der Sensor am feststehenden Lagerteil vorgesehen ist, ist dessen Energieversorgung unproblematisch.

Aus der DE 695 24 014 T2 ist ein Radlager eines Schienenfahrzeugs mit einem integrierten Drehstromgenerator bekannt. Die durch den Generator erzeugte Energie wird in einer Batterie gespeichert. Der Generator ist im Innenraum zwischen den beiden Kegelrollen angeordnet und umfasst einen Rotor, der mit dem Innenring und der Achse rotiert und einen Stator, der am Außenring ortsfest angeordnet ist. Der Rotor umfasst eine Reihe von Dauermagneten, die in gleichen Abständen auf dem Ringbereich zwischen den Kegelrollen in Umfangsrichtung angeordnet sind. Die Pole der Dauermagneten sind radial angeordnet und jeweils abwechselnd polarisiert um den Ring herum verteilt. Der Stator ist insgesamt ein Blechpaket aus magnetischen Stahlfolien mit ausgeprägten Zähnen, die jeweils eine gewickelte Spule tragen. Die dreiphasige Statorwicklung ergibt sich durch eine Y-Verschaltung der Spulen.

Aus der EP 0 402 240 A1 ist ein Schrägzylinderrollenlager mit einem integrierten Motor bekannt. Der Rotor ist mit dem Innenring verbunden, der Stator mit dem Außenring. Dieser Motor benötigt einen großen axialen Bauraum.

Aus der DE 25 05 802 A1 ist ein in ein Wälzlager integrierter Drehzahlgeber bekannt. Der induktionselektrische Drehzahlgeber umfasst einen ringförmigen, im Querschnitt C-förmigen Rotorkörper aus ferromagnetischem Material. Dieser trägt einen mehrpoligen Permanentmagneten. In dem im Rotorkörper offenen Raum ist ein ringförmiger Statorkörper mit einem Spulenkörper mit einer Spulenwicklung angeordnet. Außerdem trägt der Statorkörper eine ringförmige Zahnscheibe aus einem ferromagnetischen Material, wobei die Zähne der Zahnscheibe den Permanentmagneten des Rotors gegenüberliegend angeordnet sind. Rotor und Stator wirken derart zusammen, dass bei Relativdrehung der Lagerringe in der Spule eine der Drehzahl entsprechende elektrische Impulsfolge bzw. Wechselspannung induziert wird, die in einer Schaltanordnung zur Bestimmung und/oder Regelung der Drehzahl der Welle benutzt werden kann.

Aus der JP 2008 174 067 A ist ein Radlager mit einem Sensor bekannt, welcher ein Lastmoment auf dem Rad sicher detektiert. Der Sensor ist so kompakt, dass er in das Lager integrierbar ist. Innerhalb des Lagers ist ein magnetischer Kreis angeordnet, dessen Luftspalt durch eine Last bzw. Kraft auf das Rad verändert wird. Diese Änderung im magnetischen Fluss wird detektiert und ausgewertet.

Aus der US 7,362,023 B2 ist ein Wälzlager bekannt, welches mit einem elektrischen Generator, einem Drehzahlmesser und einer drahtlosen Übertragungseinheit ausgestattet ist. Der elektrische Generator ist in der Art eines Klauenpolgenerators ausgeführt. Ein Multipolmagnet ist dabei als Rotor auf dem Innen- oder Außenring angeordnet und trägt eine Vielzahl abwechselnd polarisierter Magneten auf seinem Umfang verteilt. Ein magnetischer Ring, der in seinem Inneren eine Spule trägt, ist als Stator dem Dauermagnetmultipolring gegenüberliegend angeordnet. Der magnetische Ring trägt ineinander greifende Klauen, die sich jeweils von den Seitenwänden des Magnetringes über die Spule hin erstrecken. Der Drehzahlmesser und die drahtlose Übertragungseinheit werden vom Generator gespeist. Mit der drahtlosen Übertragungseinheit werden Drehzahldaten an die Peripherie übertragen. JP 2004 132 447 A offenbart ein Wälzlager nach dem Oberbegriff vom Anspruch 1. Der Erfindung liegt die Aufgabe zugrunde, ein Wälzlager mit einer verbesserten und preiswert herstellbaren integrierten Auswertemöglichkeit von Betriebszuständen und ein Verfahren zum Betriebsmanagement eines solchen Wälzlagers bereitzustellen.

Die Lösung der Aufgabenstellung gelingt durch ein Wälzlager mit den Merkmalen des Anspruchs 1.

Ein erfindungsgemäßes Wälzlager umfasst zwei zueinander rotierbare Lagerringe und einen ersten permanenterregten Generator, dessen Primärteil und Sekundärteil jeweils mit einem der Lagerringe drehfest verbunden sind.

Erfindungsgemäß umfasst das Wälzlager einen zweiten Generator, der unabhängig vom ersten Generator arbeitet. Der erste Generator ist elektrisch belastet und dient der Energieversorgung einer im Lager integrierten Sensorik und/oder Aktorik, während der zweite Generator elektrisch unbelastet ist und ein Spannungssignal zur Positionsbestimmung und Drehzahlerfassung liefert.

Die Vorteile der Erfindung sind insbesondere darin zu sehen, dass innerhalb des Wälzlagers die Sensorik/Aktorik von einem in das Lager integrierten ersten Generator übernommen wird. Ein baugleicher zweiter Generator liefert Signale, aus denen Position und Geschwindigkeit des bewegten Lagerteiles und ggf. weitere Betriebsparameter ermittelt werden können.

Auf die bisher häufig verwendeten magnetoresistiven oder optischen Sensoren zur Erfassung von Drehzahl und Drehrichtung mit jeweils eigener Energieversorgung kann verzichtet werden. Die Generatoren sind preiswert in Massenproduktion herstellbar und auch nachträglich in Wälzlager aller möglichen Bauformen integrierbar. Eine Serienanwendung ist in allen Lagerstellen möglich, welche eine Überwachung bzw. Erfassung von Betriebsparametern benötigen.

Beide Generatoren sind gleicher Bauart.

Zur Bestimmung der absoluten Position des rotierenden Lagerteils weist das Sekundärteil in einer bevorzugten Ausführungsform der Erfindung um den Umfang verteilt eine ungleichmäßige Magnetfeldstärke auf. Dies kann beispielsweise dadurch erreicht werden, dass die Dauermagneten im Sekundärteil des zweiten Generators unsymmetrisch über den Umfang verteilt sind, die Dauermagneten eine unterschiedliche Magnetfeldstärke aufweisen. Die dadurch entstehende Schwebung im generierten Spannungssignal ermöglicht eine Positionsbestimmung im Sinne eines Absolutwertgebers.

Zur Erfassung von Luftspaltveränderungen infolge einer Verlagerung und/oder Belastung des Wälzlagers kann das Spannungssignal des zweiten Generators dienen. Ebenso ist es möglich, an einer Stelle zwischen den Klauen einen Hallsensor anzuordnen, dessen Signal ausgewertet wird oder eine der Klauen mit einer diese umschließenden Spule zu versehen, deren Induktionssignal auswertbar ist.

Die klauenpole der beiden Generatoren sind in einer bevorzugten Ausführungsform zueinander derart versetzt im Wälzlager angeordnet, dass eine Phasenverschiebung der beiden Generatorspannungen um 90° zueinander erreicht wird. Dies entspricht dann im Wesentlichen einem magnetoresistiven Messsystem mit zwei Spuren. Die dabei entstehenden annähernd sinus- und cosinusförmigen Spannungen ermöglichen durch eine arctan-Interpolation eine sehr genaue Bestimmung des Winkels. Durch eine Linearisierung über Stützstellen wird die arctan-Funktion angenähert. Es entsteht dabei ein im Wesentlichen sägezahnförmiges Signal mit der Periodenlänge einer Polteilung im Sinne eines Inkrementalgebers. Innerhalb einer Periode ergibt die arctan-Interpolation absolute Positionswerte. Dies gewährleistet einen geringen Quelltextumfang bei guter Ausführungsgeschwindigkeit einer Steuersoftware.

Es ist ebenso denkbar, Generatoren mit unterschiedlichen Polzahlen zu verwenden um deren Signale auszuwerten. Dann steigt die Differenz der Phasen linear mit der Absolutposition an. Das Prinzip zweier Spuren mit unterschiedlichen Polzahlen ist aus magnetoresistiven Sensoren bekannt.

Das Energiemanagement des Wälzlagers umfasst eine Spannungsanpassung an einen Nennwert, der bei einer Nenndrehzahl des Wälzlagers erreicht wird. Bei niedrigeren Drehzahlen erfolgt eine Spannungserhöhung oder bei ggf. höheren Drehzahlen eine Spannungsabsenkung. Anschließend wird die Spannung gleichgerichtet, geglättet und stabilisiert. Zum Speisen einer Ladeelektronik für einen Energiespeicher ist eine vorgeschaltete Strombegrenzung erforderlich. Der Energiespeicher versorgt dann die elektrischen Verbraucher im Wälzlager. Dazu gehören eine Auswerteelektronik zur Bestimmung von Drehzahl und Drehwinkel und ggf. weitere im Lager integrierte Sensoren und/oder Aktoren.

Eine bevorzugte Ausführungsform der Erfindung wird nachfolgend anhand der Figuren näher erläutert. Es zeigen:
- Fig. 1: eine schematische Darstellung eines Wälzlagers mit einem Klauenpolgenerator mit unsymmetrisch verteilten Dauermagneten;
- Fig. 2: einen Spannungsverlauf einer Generatorspannung, wie sie mit dem in Fig. 1 dargestellten Klauenpolgenerator generiert wird;
- Fig. 3: ein Systemmodell eines Energiemanagement-Verfahrens.

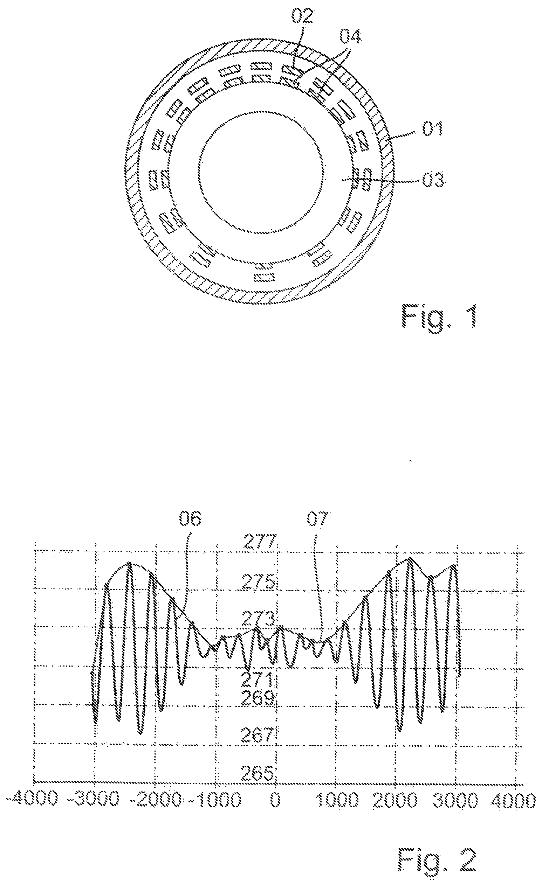

In Fig. 1 ist eine schematische Darstellung eines Klauenpolgenerators gezeigt, der in ein nicht dargestelltes Wälzlager integriert ist. Der Klauenpolgenerator umfasst eine mit einem Außenring (nicht dargestellt) drehfest verbundene Spule 01 sowie Klauen 02, die an einem Klauenring angeordnet sind und wechselseitig die Spule 02 an ihrer dem Innenring zugewandten Seite überdecken. In diesem Fall bildet der Innenring den Rotor (Sekundärteil) und die Spule mit dem Klauenring den Stator (Primärteil).

Auf dem Innenring sind Permanentmagneten 04 mit abwechselnder Polarisierung angeordnet. Sowohl die Klauen 02, als auch die Permanentmagneten 04 sind mit unterschiedlichen Abständen zueinander auf dem Umfang verteilt angeordnet. Dadurch ist eine Erfassung der absoluten Position des drehenden Lagerteils möglich. Die Ermittlung der Drehzahl ist mit dieser Anordnung aus dem Spannungssignal des Generators ebenfalls möglich.

In Fig. 2 ist ein möglicher Spannungsverlauf 06 einer zweiten Generatorspannung als Signal eines Absolutwertgebers dargestellt. Eine Hüllkurve 07 des Spannungsverlaufs 06 wird in einer dem Fachmann bekannten Art und Weise ausgewertet und liefert als Ergebnis Drehzahl und ggf. Drehwinkel.

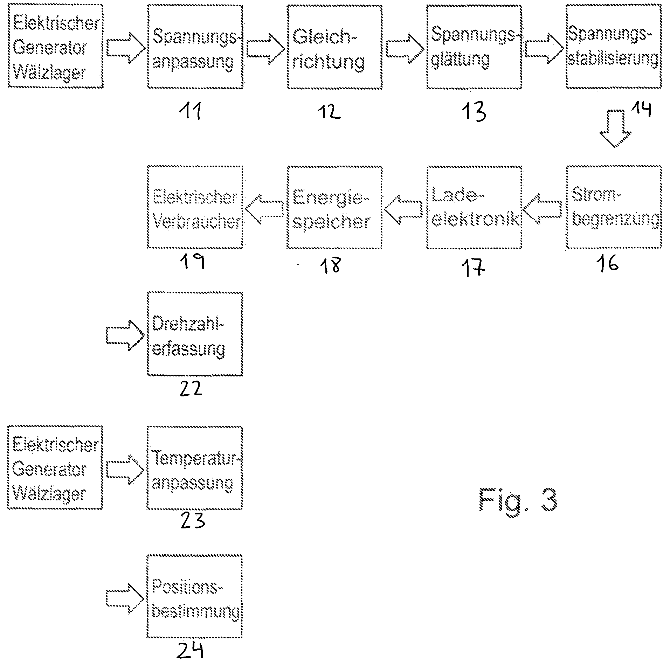

In Fig. 3 ist eine bevorzugte Ausführungsform eines Verfahrens zum Energiemanagement eines mit zwei Generatoren bestückten Wälzlagers dargestellt. Die Reihenfolge der nachfolgend beschriebenen Verfahrensschritte wird durch die in der Figur eingezeichneten Pfeile verdeutlicht.

Ein erster Generator kann verschiedene Ausführungsformen haben, hier kommen beispielsweise ein Klauenpolgenerator, ein Schenkelpolgenerator oder ein Wälzkörpergenerator in Frage. Selbstverständlich können auch andere Generatorbauformen, soweit in ein Wälzlager integrierbar, verwendet werden.

Eine im Betrieb des Wälzlagers erzeugte erste Generatorspannung wird zunächst einer Spannungsanpassung 11 unterzogen. Diese kann über einen Hochsetzsteller mit Transformator, eine Ladungspumpe, eine Villardschaltung oder eine Delonschaltung erfolgen.

Ein nachfolgender Schritt einer Gleichrichtung 12 kann über bekannte Schaltungen, wie beispielsweise eine Einpuls-, Zweipuls- oder Dreipuls-Mittel-punkt-Schaltung oder Zweipuls- oder Sechspuls-Brückenschaltung erfolgen.

Eine Spannungsglättung 13 erfolgt vorzugsweise über einen Ladekondensator, ein RC-Siebglied oder ein LC-Siebglied erfolgen. Eine Spannungsstabilisierung 14 kann mittels Parallelstabilisierung (Z-Diode und Quertransistor oder Operationsverstärker) oder Serienstabilisierung (Z-Diode mit Längstransistor, Regelverstärker und Brummkompensation oder Z-Diode mit Operationsverstärker) erfolgen.

Eine Strombegrenzung 16 wird mittels einer Überstromsicherung, eines Strombegrenzungswiderstandes, einer Stromregelung oder einer Stromrückregelung realisiert.

Eine Ladeelektronik 17 umfasst die Erzeugung einer Ladeschlussspannung, eine Ladestrombegrenzung, eine Ladezyklenerfassung, eine Temperaturerfassung und eine Ladezustandsbestimmung eines Energiespeichers 18, der beispielsweise als Superkondensator, Sekundärzelle oder Primärzelle ausgeführt sein kann.

Der Energiespeicher 18 versorgt einen elektrischen Verbraucher 19, der durch weitere im Lager integrierte oder an dessen Peripherie angeordnete Sensoren und/oder Aktoren gebildet ist.

Ein zweiter Generator dient der Drehzahlerfassung 22, der Temperaturerfassung 23 und ggf. einer Positionsbestimmung 24, jeweils am Wälzlager.

Die Drehzahlerfassung 22 kann durch Zählung physikalischer Referenzmarken erfolgen, bei der durch einen Interpolations-Algorithmus ein Zeitsignal abgeleitet wird. Damit ist eine absolute und relative Positionserfassung ebenfalls möglich.

Für eine absolute Positionsbestimmung kann ein Hallsensor dienen, der die Referenzmarke erzeugt. Der Hallsensor ist dann zwischen den Klauen angeordnet.

Eine weitere Möglichkeit zur Positionserfassung besteht darin, eine Spule vorzusehen, welche eine der Klauen 02 umschließt. Das Induktionssignal dieser Spule kann ebenfalls zur absoluten Positionsermittlung verwendet werden.

Aus dem Drehwinkel kann bekannterweise durch Differenzieren die Winkelgeschwindigkeit und durch nochmaliges Differenzieren die Winkelbeschleunigung ermittelt werden. Vorteilhafterweise werden aber die Referenzmarken für die Drehzahlbestimmung aus dem Spannungssignal des zweiten Generators durch Extremwertbestimmung gewonnen. Die Drehzahl wird durch die Frequenz des Spannungssignals wiedergegeben.

Die Temperaturerfassung 23 erfolgt vorzugsweise durch Strommessung und Spannungsmessung am zweiten Generator. Daraus wird der Gesamtwiderstand ermittelt und durch den bekannten Lastwiderstand und temperaturabhängigen Wicklungswiderstand der Spule kann auf die Temperatur im Lager geschlossen werden.

Weiterhin kann über das Spannungssignal des zweiten Generators eine Signalauswertung in einer Auswerteeinheit hinsichtlich einer Luftspaltveränderung erfolgen, oder ein Betriebsstundenzähler realisiert werden.

### Bezugszeichen liste

- 01 -: Spule
- 02 -: Klaue
- 03 -: Innenring
- 04 -: Dauermagnet
- 05 -: -
- 06 -: Spannungssignal
- 07 -: Hüllkurve
- 08 -: -
- 09: -
- 10 -: -
- 11 -: Spannungsanpassung
- 12 -: Gleichrichtung
- 13 -: Spannungsglättung
- 14 -: Spannungsstabilisierung
- 15 -: -
- 16 -: Strombegrenzung
- 17 -: Ladeelektronik
- 18 -: Energiespeicher
- 19 -: Verbraucher
- 20 -: -
- 21 -: -
- 22 -: Drehzahlerfassung
- 23 -: Temperaturerfassung
- 24 -: Positionsbestimmung

## Patentansprüche

1. Wälzlager mit einem im Zwischenraum zwischen zwei zueinander rotierbaren Lagerringen angeordneten permanenterregten ersten Generator, welcher ein Primärteil und ein Sekundärteil umfasst und im Betrieb eine erste Generatorspannung erzeugt, wobei das Sekundärteil Dauermagneten (04) aufweist, die mit abwechselnder Polarität auf dem Umfang eines der Lagerringe zumindest abschnittsweise angeordnet sind, wobei das Wälzlager einen zweiten Generator umfasst, wobei die erste Generatorspannung der Energieversorgung einer im Lager integrierten Sensorik und/oder Aktorik dient, während der zweite Generator ein Spannungssianal zur Positionsbestimmung und Drehzahlerfassung liefert, wobei der zweite Generator gleicher Bauart wie der erste Generator ist wobei die Generatoren Klauenpolgeneratoren sind, **dadurch gekennzeichnet, dass** der zweite Generator elektrisch unbelastet ist.

2. Wälziager nach Anspruch 1, **dadurch gekennzeichnet, dass** zur Bestimmung der absoluten Position des Wälzlagers das Sekundärteil um den Umfang verteilt eine ungleichmäßige Magnetfeldstärke aufweist oder ein Hallsensor zwischen den Klauen angeordnet ist oder eine eine der Klauen umschließende Spule vorgesehen ist.

3. Wälzlager nach Anspruch 2, **dadurch gekennzeichnet, dass** ein oder mehrere der Dauermagneten (04) unterschiedliche Magnetfeldstärken aufweisen.

4. Wälzlager nach Anspruch 2, **dadurch gekennzeichnet, dass** die Dauermagneten in unterschiedlichen Abständen voneinander angeordnet sind.

5. Wälzlager nach einem der Ansprüche 1 bis 4, **dadurch gekennzeichnet, dass** das Primärteil (07) oder das Sekundärteil (06) des zweiten Generators um einen Winkel α versetzt zum Primär- bzw. Sekundärteil des ersten Generators angeordnet sind, sodass der zweite Generator eine gegenüber der ersten Generatorspannung um 90° phasenversetzte zweite Generatorspannung liefert.

6. Wälzlager nach Anspruch 5, **dadurch gekennzeichnet, dass** der Winkel α dem Wert einer halben Polteilung entspricht.

## Claims

1. Rolling bearing having a permanently excited first generator, which is arranged in the intermediate space between two bearing rings which can be rotated with respect to one another, which first generator comprises a primary part and a secondary part and generates a first generator voltage during operation, wherein the secondary part has permanent magnets (04) which are arranged with alternating polarity on the circumference of one of the bearing rings, at least in certain sections and wherein the rolling bearing comprises a second generator, and the first generator voltage serves to supply energy to a sensor system and/or actuator system which is integrated in the bearing, while the second generator supplies a voltage signal for determining the position and detecting the rotational speed, wherein the second generator is of the same design as the first generator, wherein the generators are claw-pole generators, **characterized in that** the second generator is electrically unloaded.

2. Rolling bearing according to Claim 1, **characterized in that** in order to determine the absolute position of the rolling bearing the secondary part has a non-uniform magnetic field strength distributed around the circumference, or a Hall sensor is arranged between the claws, or a coil which encloses one of the claws is provided.

3. Rolling bearing according to Claim 2, **characterized in that** one or more of the permanent magnets (04) have different magnetic field strengths.

4. Rolling bearing according to Claim 2, **characterized in that** the permanent magnets are arranged at different distances from one another.

5. Rolling bearing according to one of Claims 1 to 4, **characterized in that** the primary part (07) or the secondary part (06) of the second generator is arranged offset by an angle α with respect to the primary part or secondary part of the first generator, with the result that the second generator supplies a second generator voltage with a phase offset of 90° with respect to the first generator voltage.

6. Rolling bearing according to Claim 5, **characterized in that** the angle α corresponds to the value of half a pole division.

## Revendications

1. Palier à roulement comprenant un premier générateur permanent à excitation permanente disposé entre deux bagues de palier rotatives l'une par rapport à l'autre, lequel comprend une partie primaire et une partie secondaire et, en fonctionnement, génère une première tension de générateur, la partie secondaire possédant des aimants permanents (04) qui sont disposés au moins en partie avec une polarité alternée sur le pourtour de l'une des bagues de palier, le palier à roulement comprenant un deuxième générateur, la première tension de générateur servant à l'alimentation en énergie d'un système de détection et/ou d'un système d'actionnement intégré dans le palier, alors que le deuxième générateur délivre un signal de tension destiné à la détermination de la position et à l'acquisition de la vitesse de rotation, le deuxième générateur étant du même type de construction que le premier générateur, les générateurs étant des générateurs à pôles à griffes, **caractérisé en ce que** le deuxième générateur n'est pas chargé électriquement.

2. Palier à roulement selon la revendication 1, **caractérisé en ce que** pour déterminer la position absolue du palier à roulement, la partie secondaire présente une intensité de champ magnétique irrégulière distribuée sur le pourtour, ou alors un capteur à effet Hall est disposé entre les griffes, ou alors il existe une bobine qui entoure les griffes.

3. Palier à roulement selon la revendication 2, **caractérisé en ce qu'**un ou plusieurs des aimants permanents (04) présentent des intensités de champ magnétique différentes.

4. Palier à roulement selon la revendication 2, **caractérisé en ce que** les aimants permanents sont disposés à des écarts différents les uns des autres.

5. Palier à roulement selon l'une des revendications 1 à 4, **caractérisé en ce que** la partie primaire (07) ou la partie secondaire (06) du deuxième générateur est montée décalée d'un angle α par rapport à la partie primaire ou secondaire du premier générateur, de sorte que le deuxième générateur délivre une tension de générateur déphasée de 90° par rapport à la première tension de générateur.

6. Palier à roulement selon la revendication 5, **caractérisé en ce que** l'angle α correspond à la valeur d'un demi pas polaire.
